# EUROPÄISCHE PATENTSCHRIFT

(11) **EP 1 070 093 B1**
(45) Veröffentlichungstag und Bekanntmachung des Hinweises auf die Patenterteilung: **05.06.2002**
(21) Anmeldenummer: 99916829.7
(22) Anmeldetag: 18.03.1999
(51) Int. Cl.: C08G 69/00, C08K 5/3435

(54) **INHÄRENT LICHT- UND HITZESTABILISIERTE POLYAMIDE MIT VERBESSERTER NASSECHTHEIT**
INHERENTLY LIGHT- AND HEAT-STABILIZED POLYAMIDES WITH IMPROVED WET FASTNESS
POLYAMIDES PHOTOSTABILISES ET THERMOSTABILISES DE MANIERE INTRINSEQUE, PRESENTANT UNE RESISTANCE AMELIOREE AU MOUILLE

(30) Priorität: 20.03.1998 DE 19812135
(43) Veröffentlichungstag der Anmeldung: 24.01.2001
(73) Patentinhaber: BASF AKTIENGESELLSCHAFT, 67056 Ludwigshafen (DE)
(72) Erfinder: BREINER, Ulrike, D-68642 Bürstadt (DE); JULIUS, Manfred, D-67117 Limburgerhof (DE); NEUBERG, Rainer, D-67125 Dannstadt-Schauernheim (DE); WEISS, Robert, D-67281 Kirchheim (DE); WILMS, Axel, D-67256 Weisenheim (DE); HU, Harry, Y., Arden, NC 28704 (US)
(86) Internationale Anmeldenummer: EP9901794
(87) Internationale Veröffentlichungsnummer: WO9948949

(56) Entgegenhaltungen:
- EP-A- 0 332 761
- WO-A-91/03511
- WO-A-97/49751
- DE-A- 3 233 953
- DE-A- 4 303 138
- US-A- 4 234 700

## Beschreibung

Die vorliegende Erfindung betrifft ein Verfahren zur Herstellung von Polyamiden, dadurch gekennzeichnet, daß die Polymerisation von Ausgangsmonomeren oder Ausgangsoligomeren in Gegenwart von mindestens einer Verbindung der Formel (I) durchgeführt wird, wobei 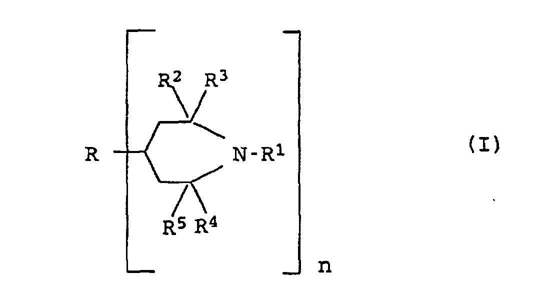
- R: ein C₁- bis C₂₀ aliphatischer gesättigter Kohlenwasserstoff R⁸, der 1-4 gleiche oder
unterschiedliche amidbildende Gruppen R⁷ trägt,
- R⁷: ausgewählt aus der Gruppe bestehend aus - (NHR⁹), wobei R⁹H, eine Alkylgruppe mit 1 bis 8 C-Atomen, eine Cycloalkylgruppe mit 3 bis 10 C-Atomen oder eine Alkylengruppe mit 2 bis 20 C-Atomen, Carboxyl und Carboxylsäurederivate ist.
- R¹: H, C₁-C₂₀-Alkyl, Cycloalkyl, Benzyl, OR⁶ mit
- R⁶: H, C₁-C₂₀-Alkyl, Cycloalkyl, Benzyl
- R², R³, R⁴, R⁵: unabhängig voneinander C₁-C₁₀-Alkyl
- n: eine natürliche Zahl größer 1 bedeutet,
wobei die mit R verknüpften Piperidin-Derivate hinsichtlich der Substituenten, unter denen R¹, R², R³, R⁴ und R⁵ verstanden werden, unterschiedlich oder gleich sind,
wobei die Verbindung der Formel I den Ausgangsmonomeren oder der polymerisierenden Reaktionsmischung zugesetzt und durch Reaktion mindestens einer der amidbildenden Gruppen R⁷ an das Polyamid gebunden wird.

Ferner betrifft sie nach diesem Verfahren erhältliche Polyamide, die Verwendung solcher Polyamide zur Herstellung von Fäden, Fasern, Folien, Flächengebilden und Formkörpern, sowie Fäden, Fasern, Folien, Flächengebilde und Formkörper, die ein solches Polyamid enthalten.

Die Herstellung von Polyamide, u.a. auch von Polyamid 6 und Polyamid 66, durch Polymerisation bzw. Polykondensation von entsprechenden Ausgangsmonomeren oder Ausgangsoligomeren ist allgemein bekannt (Adolf Echte, Handbuch der technischen Polymerchemie, VCH Weinheim, 1993, S. 553).

Die Anwendungseigenschaften, wie Hitzebeständigkeit, Lichtbeständigkeit, Anfärbbarkeit, Beständigkeit gegen das Auswaschen von Farbe (Farb-Naßechtheit), solcher Polyamide ist für viele Anwendungen unbefriedigend.

So können sich z.B. Probleme bei der Anfärbung durch chemische Veränderungen (oxidativ/thermische Schädigungen) der Polymere bei Hitzefixier-(Heat Setting-) prozessen von Teppichfäden oder textilen Flächengebilden ergeben. Diese Probleme können endlose oder geschnittene Fäden (Stapelfasern) betreffen.

Es ist bekannt, den Polyamiden Stabilisatoren zur Verbesserung dieser Eigenschaften zuzusetzen. Ein derartiger Zusatz kann vor, während oder nach der Polymerisation erfolgen, z.B. auch erst während der Verarbeitung.

Werden die Stabilisatoren dem Polyamid beigemischt und nicht an die Polymerkette gebunden, können sie aus dem Polymeren auswandern, verdampfen oder ausgewaschen werden, so daß sich die Wirksamkeit der Stabilisierung in unerwünschter Weise vermindert und Verunreinigungen an die Umgebung (Luft, Färbebad, Reinigungsbäder) abgegeben werden können. So beschreibt DE-A-39 01 717 die Verbesserung der Anfärbbarkeit von Polyamiden durch Zugabe geringer Mengen mindestens einer Amino- oder Iminoverbindung mit einer Cycloalkyl-, aromatischen oder heteroaromatischen Gruppierung im Molekül.

WO-A-91/03511 beschreibt die Herstellung von Polyamiden mit verbesserter Licht-, Hitze- und Naßfestigkeit und -Stabilität in Gegenwart von Verbindungen mit z. B. zwei Piperidylgruppen und einer Brücke, die neben Triazin amidbildende Gruppen aufweist.

Die Zugabe von 2,2,6,6-Tetramethylpiperidin-Derivaten, die in 4-Position eine amidbildende Gruppe und in 1-Position gegebenenfalls substituiert sein können, während der Polymerisation bzw. Polykondensation ist beispielsweise in WO 95/28443, DE-A-44 13 177, WO 97/05189 und WO 97/13800 beschrieben. Die Verwendung dieser Stabilisatoren führt zu einer Verringerung der Polymerisations- bzw. Polykondensationsgeschwindigkeit und damit einer Verteuerung der Herstellkosten für die Polyamide durch eine reduzierte Raum-Zeit-Ausbeute. Zudem ist die Naßechtheit solcher Polyamide unbefriedigend.

Der vorliegenden Erfindung lag die Aufgabe zugrunde, ein Verfahren zur Herstellung von Polyamiden, nach diesem Verfahren erhältliche Polyamide, die Verwendung solcher Polyamide zur Herstellung von Fäden, Fasern, Folien, Flächengebilden und Formkörpern, sowie Fäden, Fasern, Folien, Flächengebilde und Formkörper, die ein solches Polyamid enthalten, zur Verfügung zu stellen, die die genannten Nachteile vermeiden.

Demgemäß wurde das eingangs definierte Verfahren zur Herstellung von Polyamiden, nach diesem Verfahren erhältliche Polyamide, die Verwendung solcher Polyamide zur Herstellung von Fäden, Fasern, Folien, Flächengebilden und Formkörpern, sowie Fäden, Fasern, Folien, Flächengebilde und Formkörper, die ein solches Polyamid enthalten, gefunden.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX ® Faser, US-A-3,287,324) oder Poly-paraphenylen-terephthalamid (KEVLAR ® Faser, US-A-3,671,542).

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Aminound Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Diese Polymerisationsreaktion bezeichnet man üblicherweise als Polykondensation.

Die Polymerisation aus Lactamen als Ausgangsmonomeren oder Ausgangsoligomeren bezeichnet man üblicherweise als Polyaddition.

Als Ausgangsmonomere oder Ausgangsoligomere zur Herstellung von Polyamiden eignen sich beispielsweise Monomere oder Oligomere von C₂ - bis C₂₀ -, vorzugsweise C₃ - bis C₁₈ - Aminosäuren, wie 6-Aminocapronsäure, 11-Aminoundecansäure, sowie deren Dimere, Trimere, Tetramere, Pentamere oder Hexamere,
Monomere oder Oligomere von C₂ - bis C₂₀ - Aminosäuramiden, wie 6-Aminocapronsäureamid, 11-Aminoundecansäureamid sowie deren Dimere, Trimere, Tetramere, Pentamere oder Hexamere,
Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
sowie deren Dimere, Trimere, Tetramere, Pentamere oder Hexamere,
Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
Monomere oder Oligomere eines C₆ - bis C₂₀ -, vorzugsweise C₆ - bis C₁₀ - aromatischen Diamins, wie m- oder p-Phenylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
sowie deren Dimere, Trimere, Tetramere, Pentamere oder Hexamere,
Monomere oder Oligomere eines C₆ - bis C₂₀ - vorzugsweise C₆ - bis C₁₀ - aromatischen Diamins, wie m- oder p-Phenylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder oligomere eines C₆ - bis C₂₀ - vorzugsweise C₆ - bis C₁₀ - aromatischen Diamins, wie m- oder p-Phenylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
Monomere oder Oligomere eines C₇ - bis C₂₀ -, vorzugsweise C₈ - bis C₁₈ - arylaliphatischen Diamins, wie m- oder p-Xylylendiamin,
mit einer C₂ - bis C₂₀ -, vorzugsweise C₂ - bis C₁₄ - aliphatischen Dicarbonsäure, wie Sebacinsäure, Decandicarbonsäure oder Adipinsäure,
sowie deren Dimere, Trimere, Tetramere, Pentamere oder Hexamere,
Monomere oder Oligomere eines C₇ - bis C₂₀ -, vorzugsweise C₈ - bis C₁₈ - arylaliphatischen Diamins, wie m- oder p-Xylylendiamin,
mit einer C₆ - bis C₂₀ -, vorzugsweise C₆ - bis C₁₀ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines C₇ - bis C₂₀ -, vorzugsweise C₈ - bis C₁₈ - arylaliphatischen Diamins, wie m- oder p-Xylylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
Monomere oder Oligomere eines C₂ - bis C₂₀ - vorzugsweise C₂ - bis C₁₈ - arylaliphatischen oder vorzugsweise aliphatischen Lactams , wie Enantholactam, Undecanolactam, Dodecanolactam oder Caprolactam,
sowie Homopolymere, Copolymere, Mischungen und Pfropfungen solcher Ausgangsmonomere oder Ausgangsoligomere.

Bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 7, Nylon 11, Nylon 12 und den Aramiden Poly-metaphenylen-isophthalamid oder Poly-paraphenylen-terephthalamid, insbesondere zu Nylon 6 und Nylon 66, führen.

In der Verbindung der Formel (I) stellt R einen C₁ - bis C₂₀ -, vorzugsweise C₆ - bis C₁₈ - aliphatischen gesättigten Kohlenwasserstoff R⁸ dar, der 1-4 gleiche oder unterschiedliche amidbildende Gruppen R⁷ trägt.

Die Kohlenwasserstoffe R⁸ können funktionelle Gruppen, wie Ethergruppen, nichtamidbildende Amingruppen oder Säuregruppen, wie Phosphonsäure-, Phosphorsäure-, vorzugsweise Sulfonsäure-Gruppen oder deren Derivate, vorzugsweise Salze, insbesondere Alkalisalze, wie Lithium-, Natrium- oder Kalium-Salze, tragen.

In einer bevorzugten Ausführungsform des erfindungsgemäßen Verfahrens stellt R⁸ eine C₁ - bis C₂₀ - Alkylengruppe, insbesondere eine Hexamethylengruppe, dar, die außer R⁷ keine weiteren funktionellen Gruppen aufweist.

Als amidbildende Gruppe R⁷ kommen erfindungsgemäß -(NHR⁹), wobei R⁹ H oder eine Alkylgruppe mit 1 bis 8 C-Atomen, eine Cycloalkylgruppe mit 3 bis 10 C-Atomen oder eine Alkylengruppe mit 2 bis 20 C-Atomen darstellt, eine Carboxylgruppe, eine Carboxyl-Derivat-Gruppe oder vorzugsweise -(NH)- in Betracht. Trägt R mehrere Gruppen R⁷, so können diese Gruppen unterschiedlich oder vorzugsweise gleich sein.

Als R¹ kommen Alkylgruppen mit 1 bis 20, vorzugsweise 1 bis 18 C-Atomen, eine substituierte oder vorzugsweise unsubstituierte Benzylgruppe oder eine Gruppe OR⁶, wobei R⁶ eine Alkylgruppe mit 1 bis 20, vorzugsweise 1 bis 18 C-Atomen, eine substituierte oder vorzugsweise unsubstituierte Benzylgruppe oder vozugsweise Wasserstoff darstellt, in Betracht. Ein besonders bevorzugter Rest R¹ ist Wasserstoff.

Geeignete Reste R², R³, R⁴ und R⁵ sind unabhängig voneinander Alkylgruppen mit 1 bis 10 C-Atomen, vorzugsweise Methyl- oder Ethyl-Gruppen, insbesondere Methylgruppen. Die Reste R², R³, R⁴ und R⁵ können unterschiedlich, vorzugsweise gleich sein.

Als Index n kommen natürliche Zahlen größer als 1 in Betracht, wie 2, 3, 4, 5, und 6, vorzugsweise 2, 3 und 4, insbesondere 2.

Die mit R verknüpften Piperidin-Derivate können gleich oder unterschiedlich, vorzugsweise gleich sein.

Als Verbindung (I) kann eine chemische Verbindung oder ein Gemisch verschiedener Verbindungen eingesetzt werden.

Als besonders bevorzugte Verbindung der Formel (I) kommt 1,6-Bis-(4-amino-2,2,6,6-tetramethylpiperidino)-hexan in Betracht. Diese Verbindung sowie deren Herstellung ist allgemein bekannt und beispielsweise über Aldrich Chemical Company, Inc. kommerziell erhältlich.

Die Verbindung der Formel (I) wird erfindungsgemäß den Ausgangsmonomeren oder der polymerisierenden Reaktionsmischung zugesetzt und wird durch Reaktion mindestens einer der amidbildenden Gruppen R⁷ an das Polyamid gebunden. Die sekundären Aminogruppen der Piperidin-Ringsysteme reagieren dabei wegen sterischer Hinderung nicht.

Durch die chemische Bindung der Verbindung (I) an oder in ein Polyamid gemäß erfindungsgemäßem Verfahren werden erfindungsgemäß Polyamide mit den eingangs erwähnten vorteilhaften Eigenschaften erhalten. Das erfindungsgemäße Verfahren bietet somit den Vorteil, daß ein ansonsten für das Einmischen von Verbindungen zur Verbesserung der Eigenschaften reiner Polyamide benötigter gesonderter Verfahrensschritt nicht mehr erforderlich ist. Hiermit entfallen Probleme bzw. Qualitätsminderungen, wie sie beim Einmischen solcher Verbindungen nach oberflächlicher Aufbringung auf das Polymergranulat, durch Unverträglichkeit, Viskositätsabbau, Auswandern, Verdampfen oder Auswaschen dieser Verbindungen oder Beanspruchungen, wie sie beim Konfektionieren auftreten, entstehen können.

Die Polymeristaion bzw. Polykondensation der Ausgangsmonomere in Gegenwart der Verbindung (I) wird vorzugsweise nach den üblichen Verfahren durchgeführt. So kann die Polymerisation von Caprolactam in Gegenwart einer Verbindung (I) beispielsweise nach den in DE-A 14 95 198, DE-A 25 58 480, DE-A 44 13 177, Polymerization Processes, Interscience, New York, 1977, S. 424-467 und Handbuch der Technischen Polymerchemie, VCH Verlagsgesellschaft, Weinheim, 1993, S. 546-554 beschriebenen kontinuierlichen oder diskontinuierlichen Verfahren erfolgen. Die Polymerisation von AH-Salz in Gegenwart einer Verbindung (I) kann nach dem üblichen diskontinuierlichen Verfahren (siehe: Polymerization Processes, Interscience, New York, 1977, S. 424-467, insbesondere 444-446) oder nach einem kontinuierlichen verfahren, z.B. gemäß EP-A 129 196, erfolgen. Grundsätzlich können Verbindung (I) und Ausgangsmonomere getrennt oder als Gemisch dem Reaktor zugeführt werden. Vorzugsweise führt man die Verbindung (I) nach einem vorgegebenen Menge-/Zeit-Programm zu.

In einer bevorzugten Ausführungsform wird die Verbindung (I) den Ausgangsmonomeren in einer Menge von 0,015 bis 0,4 Mol-%, vorzugsweise 0,025 bis 0,25 Mol-%, jeweils bezogen auf 1 Mol Säureamidgruppen des Polyamids zugesetzt. Diese Mengenangabe bezieht sich bespielsweise bei der Herstellung von Polyamid 6 auf 1 Mol Caprolactam oder bei der Herstellung von Polyamid 66 auf 0,5 Mol AH-Salz.

In einer bevorzugten Ausgestaltung der Erfindung wird die Verbindung (I) mit mindestens einem der üblichen Kettenregler kombiniert. Geeignete Kettenregler sind beispielsweise aliphatische und aromatische Monocarbonsäuren wie Essigsäure, Propionsäure und Benzoesäure, aliphatische und aromatische Dicarbonsäuren wie C₄-C₁₀-Alkandicarbonsäuren, vorzugsweise Sebacinsäure und Dodecandisäure, insbesondere Adipinsäure und Azelainsäure, aliphatische C₅-C₈-Cycloalkandicarbonsäuren, insbesondere Cyclohexan-1,4-dicarbonsäure, aromatische Dicarbonsäuren wie Benzolund Naphthalindicarbonsäuren, vozugsweise Isophthalsäure, 2,6-Naphthalindicarbonsäure, insbesondere Terephthalsäure, monofunktionelle Amine und bifunktionelle Amine, vorzugsweise Hexamethylendiamin oder Cyclohexyldiamin sowie Gemische solcher Säuren und Gemische solcher Amine. Hierbei werden die Kettenreglerkombination und die angewandten Mengen u.a. nach den gewünschten Polymereigenschaften, wie Viskosität oder Endgruppengehalt ausgewählt. Verwendet man Dicarbonsäuren als Kettenregler, so setzt man vorzugsweise die Kettenregler in einer Menge von 0,06 bis 0,6 Mol-%, bevorzugt 0,1 bis 0,5 Mol-%, jeweils bezogen auf 1 Mol Säureamidgruppe des Polyamids, ein.

In einer anderen bevorzugten Ausgestaltung wird die Polymerisation bzw. Polykondensation nach dem erfindungsgemäßen Verfahren in Gegenwart mindestens eines Pigments durchgeführt. Bevorzugte Pigmente sind Titandioxid, wobei Titandioxid vorzugsweise in der Anatas-Modifikation vorliegt, oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden. Durch die Verwendung einer Verbindung (I) (auch als Kettenregler-Bestandteil) werden die Eigenschaften des Polymers deutlich verbessert gegenüber einem Polymeren, das nur Pigment und keine Verbindung (I) oder nur Pigment und eines der eingangs erwähnten 2,2,6,6-Tetramethylpiperidin-Derivate enthält.

Die erfindungsgemäßen Polyamide können vorteilhaft zur Herstellung von Fäden, Fasern, Folien, Flächengebilden und Formkörpern verwendet werden. Besonders vorteilhaft sind dabei Fäden, die aus Polyamiden, insbesondere Polycaprolactam, durch Schnellspinnen bei Abzugsgeschwindigkeiten von mindestens 4000 m/min erhalten werden. Die unter Verwendung der erfindungsgemäßen Polyamide erhaltenen Fäden, Fasern, Folien, Flächengebilde und Formkörper können vielseitig verwendet werden, beispielsweise als Textilbekleidung oder Teppichfasern.

### Beispiele

Die relative Viskosität der Polyamide wurde in 1%iger Lösung (1 g/100 ml) in konzentrierter Schwefelsäure (96 Gew.-%) bei 25°C bestimmt.

Die Bestimmung des Endgruppengehalts wurde als acidimetrische Titration durchgeführt. Die Amino-Endgruppen wurden in einer Lösung in Phenol/Methanol 70:30 (Gewichtsteile) mit Perchlorsäure titriert. Die Carboxyl-Endgruppen wurden in einer Lösung in Benzylalkohol mit Kalilauge titriert.

Zur Bestimmung der Farb-Naßechtheit wurden Fäden zu Strickstücken verarbeitet, anschließend hitzefixiert, gefärbt, mit Farbstoffixiermittel behandelt und getrocknet. Die Bestimmung der Farbechtheit erfolgte gemäß ISO-E01:1994 (Wasserechtheit, schwer).

Die Hitzefixierung erfolgte im Spannrahmen bei 196°C für 45 sek. Das Strickstück wurde dann angefärbt in heißem Wasser (98°C) mit einem Gemisch aus 2,53 Gew.-% Telon-Echtrot AF3G 150% (entsprechend 3,8 % Acid Red 151) und 0,50 Gew.-% Acid Rhodamin B 400% (entsprechend 2 % Acid Red 52) bei pH 3,5. Zur Verbesserung der Farbstoffixierung wurde das Strickstück in einer Lösung von 2 Gew.-% Mesitol NBS bei 77°C in Wasser für 30 min behandelt und anschließend mit Wasser ausgespült. Nach dem Trocknen wurde der Farbechtheitstest durchgeführt. Dazu wurde eine Probe des Gewebes angefeuchtet und zwischen zwei ungefärbte Standardgewebe gelegt. Der Stapel aus den drei Gewebelagen wurde mit einem Normgewicht beschwert und für 4h bei 37°C temperiert. Die Beurteilung der Echtheit erfolgte durch Vergleich der Farbtiefen der angeschmutzten Begleitgewebe mit einer Standard Graustufen-Skala.

Die UV-Stabilität der Garne wurde gemäß DIN 54004 (ISO 105 B 02) nach 14 tägiger Belichtungszeit und anschließender Messung der Restfestigkeit im Vergleich zu einer unbehandelten Probe ermittelt.

Zur Ermittlung der Thermofixierstabilität wurde ein Probestrang zu 5 g für 120 sek in einem auf 185°C vorgeheizten Wärmeschrank gelagert. Anschließend wurde die Reißfestigkeit des Garns im Vergleich zu einerm unbehandelten Faden ermittelt und als Restreißfestigkeit [%] angegeben.

Das Kondensationspotential wurde bestimmt aus dem Produkt der kondensationsfähigen AEG und Carboxylendgruppen.

### Herstellung der Polyamide (a)

In einem 360 1 Kessel wurde eine Mischung aus 100 kg Caprolactam, 15 kg Wasser und den Zusätzen gemäß Tabelle 1 (Mengenangabe in Gew.-% bez. auf Caprolactam) innerhalb von 2 Stunden auf 260°C aufgeheizt. Nach dem Entspannen innerhalb von 90 min wurde 45 min bei 260°C nachkondensiert.

Das Produkt wurde anschließend granuliert, in jeweils zwei Portionen in einem 100 1 Kessel mit 100 1 Wasser bei 100°C dreimal jeweils 5 Stunden extrahiert und im Taumeltrockner unter stickstoff bei 160°C getrocknet.

Die Verspinnung der Polymere erfolgte auf einer Schnellspinnanlage (Ems-Inventa AG) bei 270°C und 5040 m/min Spulgeschwindigkeit im H4S-Verfahren im Titer 44f12 (rund). Die Abzugsgeschwindigkeit betrug 4300 m/min (Duo 1), das Streckverhältnis 1 : 1,28 (Duo 2 = 5500 m/min) und die Fadenspannung vor dem Wickler betrug 3 cN. Die Dampfkammer wurde mit 3 bar Prozeßdampf betrieben, und der Präparationsgehalt des Garns lag bei 0.8 %. Die Garne wiesen folgende Eigenschaften auf: Dehnung 42 %, Festigkeit 5,2 cN/dtex, Kochschrumpf 14 %.

Die Eigenschaften der Polyamide sind in Tabelle 2 zusammengefaßt. Die erfindungsgemäßen Polyamide zeigen gegenüber den Vergleichs-Polyamiden eine verbesserte Licht- und Hitzestabilität sowie eine verbesserte Naßechtheit.

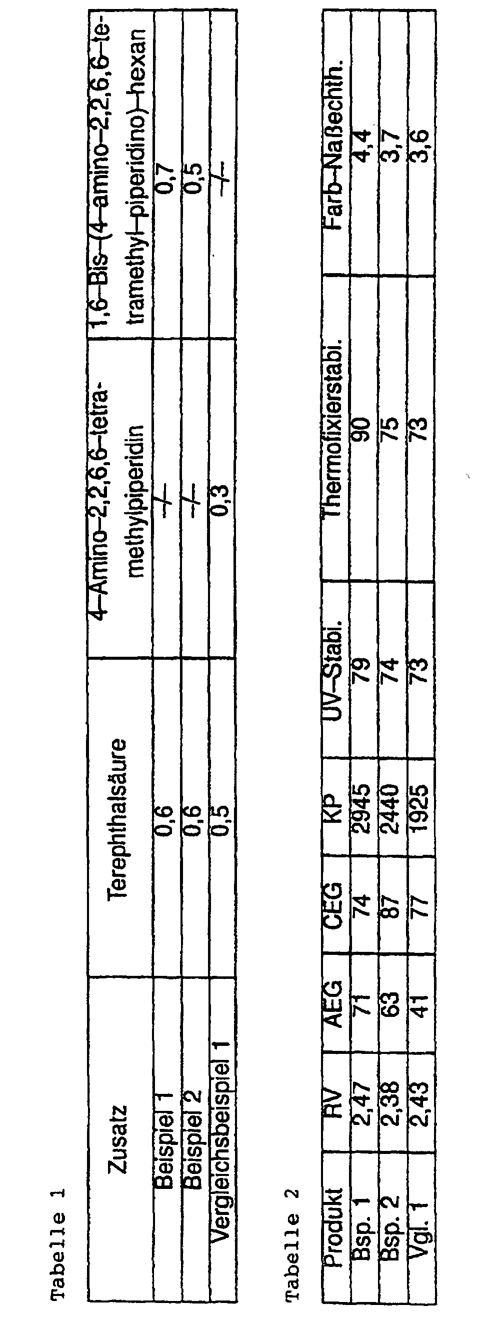

- RV: Relative Viskosität
- AEG: Amino-Endgruppengehalt in meq/kg
- CEG: Carboxyl-Endgruppengehalt in meq/kg
- KP: Kondensationspotential
- UV-Stabi.: UV-Stabilität, Resthöchstzugkraft in %
- Thermofixierstabi.: Thermofixierstabilität, Restzugkraft in %
- Farb-Naßechth.: Naßechtheit, AATCC Gray Scale

### Herstellung der Polyamide (b)

Die Mischungen gemäß Tabelle 3 wurden in einem Glasrohr unter Stickstoff-Atmosphäre eingeschmolzen. Das verschlossene Rohr wurde auf 260°C erhitzt in den Reaktionszeiten gemäß Tabelle 4. Die Produkte wiesen die RV-Werte gemäß Tabelle 4 auf.

**Tabelle 3**

| Bsp. 3 | Vgl. 2 |
|---|---|
| 50 g Caprolactam | 50 g Caprolactam |
| 0,285 g Terephthalsäure | 0,285 g Terephthalsäure |
| 25 ml Wasser | 25 ml Wasser |
| 0,354 g 1,6-Bis-(4-amino-2,2,6,6-tetramethyl-piperidino)-hexan (0,2 mol-% bez. auf Caprolactam) | 0,140 g 4-Amino-2,2,6,6-tetramethylpiperidin (0,2 mol-% bez. auf Caprolactam) |

**Tabelle 4**

| Reaktionszeit [h] | Bsp. 3, HV | Bsp. 3, AEG | Vgl. 2, RV | Vgl. 2, AEG |
|---|---|---|---|---|
| 0,5 | 1,20 | | 1,24 | |
| 1,5 | 1,78 | | 1,81 | |
| 3 | 1,98 | | 2,01 | |
| 6 | 1,99 | | 2,08 | |
| 9 | 2,1 | 108 | 2,08 | 70 |

### Herstellung der Polyamide (c)

In einem 1Liter Autoklaven wurde eine Mischung gemäß Tabelle 5 innerhalb von 1 Stunde auf 270°C. Nach dem Entspannen innerhalb von 45 Minuten wurde 60 Minuten bei 260°C nachkondensiert. Das Produkt wurde anschließend granuliert, mit Wasser extrahiert und bei 80°C getrocknet. Es wurden die Ergebnisse gemäß Tabelle 6 ermittelt.

**Tabelle 5**

| Vgl. 3 | Vgl. 4 | Bsp. 4 |
|---|---|---|
| 300 g Caprolactam | 300 g Caprolactam | 300 g Caprolactam |
| 30 g Wasser | 30 g Wasser | 30 g Wasser |
| 1,68 g lerephthalsäure | 1,68 g lerephthalsäure | 1,68 g Terephthalsäure |
| 0,84 g 4-Amino-2,2,6,6-tetramethylpiperidin (0,2 mol-% bez. auf Caprolactam) | 1,68 g 4-Amino-2,2,6,6-tetramethylpiperidin (0,4 mol-% bez. auf Caprolactam) | 2,1 g 1,6-Bis-(4-amino-2,2,6,6-tetramethylpiperidino)-hexan (0,2 mol-% bez. auf Caprolactam) |

**Tabelle 6**

| Vgl. 3, RV | Vgl. 4, RV | Bsp. 4, RV |
|---|---|---|
| 2,40 | 2,32 | 2,47 |

Eine Verdopplung des Regler-Gehalts bei Vgl. 4 gegenüber Vgl. 3, d.h. eine Verdopplung der Anzahl der sterisch gehinderten Aminogruppen im Polymer, verlangsamt den Aufbau des Molekulargewichts und erniedrigt das Nachkondensationspotential solcher Produkte. Bei dem erfindungsgemäßen Polymer besteht die Möglichkeit, ohne Verringerung des Nachkondensationspotentials die doppelte Anzahl an sterisch gehinderten Aminoendgruppen einzuführen.

## Patentansprüche

1. Verfahren zur Herstellung von Polyamiden, **dadurch gekennzeichnet, daß** die Polymerisation von Ausgangsmonomeren oder Ausgangsoligomeren in Gegenwart von mindestens einer Verbindung der Formel (I) durchgeführt wird, wobei 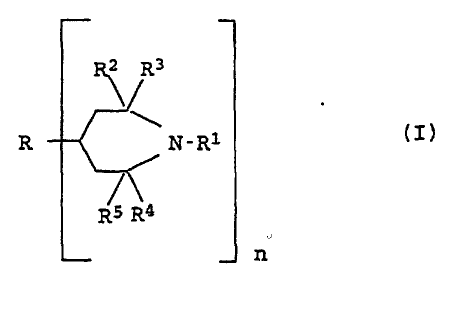
R ein C₁- bis C₂₀ aliphatischer gesättigter Kohlenwasserstoff R⁸, der 1-4 gleiche oder
unterschiedliche amidbildende Gruppen R⁷ trägt,
R⁷ ausgewählt aus der Gruppe bestehend aus -(NHR⁹), wobei R⁹H, eine Alkylgruppe mit 1 bis 8 C-Atomen, eine Cycloalkylgruppe mit 3 bis 10 C-Atomen oder eine Alkylengruppe mit 2 bis 20 C-Atomen, Carboxyl und Carboxylsäurederivate ist.
R¹ H, C₁-C₂₀-Alkyl, Cycloalkyl, Benzyl, OR⁶ mit
R⁶ H, C₁-C₂₀-Alkyl, Cycloalkyl, Benzyl
R², R³, R⁴, R⁵ unabhängig voneinander C₁-C₁₀-Alkyl
n eine natürliche Zahl größer 1 bedeutet,
wobei die mit R verknüpften Piperidin-Derivate hinsichtlich der Substituenten, unter denen R¹, R², R³, R⁴ und R⁵ verstanden werden, unterschiedlich oder gleich sind,
wobei die Verbindung der Formel I den Ausgangsmonomeren oder der polymerisierenden Reaktionsmischung zugesetzt und durch Reaktion mindestens einer der amidbildenden Gruppen R⁷ an das Polyamid gebunden wird.

2. Verfahren nach Anspruch 1, wobei die mit R verknüpften Piperidin-Derivate hinsichtlich der Substituenten, unter denen R¹, R², R³, R⁴ und R⁵ verstanden werden, gleich sind.

3. Verfahren nach Anspruch 1 oder 2, wobei R¹ H ist.

4. Verfahren nach den Ansprüchen 1 bis 3, wobei die an einem Piperidin-Derivat befindlichen Substituenten R², R³, R⁴ und R⁵ gleich sind.

5. Verfahren nach den Ansprüchen 1 bis 4, wobei ein Substituent R² an einem Piperidin-Derivat eine Methyl-Gruppe ist.

6. Verfahren nach den Ansprüchen 1 bis 5, wobei n gleich 2 ist. R7 ausgewählt aus der Gruppe bestehend aus - (NHR⁹), wobei R⁹ H, eine Alkylgruppe mit 1 bis 8 C-Atomen, eine Cycloalkylgruppe mit 3 bis 10 C-Atomen oder eine Alkylengruppe mit 2 bis 20 C-Atomen ist, Carboxyl und Carboxylsäurederivate.

7. Verfahren nach den Ansprüchen 1 bis 6, wobei R eine Gruppe der Formel
- NH -R⁸ - NH -
mit
R⁸ Alkylengruppe mit 1 bis 20 C-Atomen
ist.

8. Verfahren nach den Ansprüchen 1 bis 7, wobei R die Gruppe - NH - CH₂ - CH₂ - CH₂ - CH₂ - CH₂ - CH₂ - NH - ist.

9. Verfahren nach den Ansprüchen 1 bis 8, wobei man die Polymerisation bzw. Polykondensation in Gegenwart von mindestens einem Pigment durchführt.

10. Verwendung einer Verbindung (I) gemäß den Ansprüchen 1 bis 9 zur Herstellung von Polyamiden.

11. Polyamid, erhältlich nach einem Verfahren gemäß den Ansprüchen 1 bis 9.

12. Verwendung eines Polyamids gemäß Anspruch 11 zur Herstellung von Fäden, Fasern, Folien, Flächengebilden und Formkörpern.

13. Fäden, Fasern, Folien, Flächengebilde und Formkörper, enthaltend ein Polyamid gemäß Anspruch 11.

## Claims

1. A process for preparing polyamides, which comprises polymerizing starting monomers or starting oligomers in the presence of at least one compound of the formula (I) 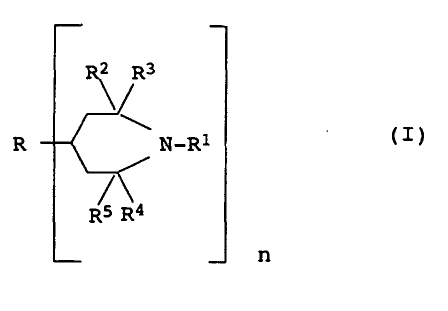 where
R is a C₁ to C₂₀ aliphatic saturated hydrocarbon R⁸ which bears 1-4 identical or different amide-forming groups R⁷,
R₇ is selected from the group consisting of -(NHR⁹), (R⁹ being H, alkyl having from 1 to 8 carbon atoms, cycloalkyl having from 2 to 20 carbon atoms), carboxyl and carboxylic acid derivatives,
R¹ is H, C₁-C₂₀-alkyl, cycloalkyl, benzyl or OR⁶, where
R⁶ is H, C₁-C₂₀-alkyl, cycloalkyl or benzyl,
R², R³, R⁴ and R⁵ are independently C₁-C₁₀-alkyl,
n is a natural number greater than 1,
where the piperidine derivatives attached to R are identical or different with regard to the substituents, meaning R¹, R², R³, R⁴ and R⁵,
wherein the compound of the formula I is added to the starting monomers or to the polymerizing reaction mixture and becomes attached to the polyamide through reaction of at least one of the amide-forming groups R₇.

2. A process as claimed in claim 1, wherein the piperidine derivatives attached to R are identical with regard to the substituents, meaning R¹, R², R³, R⁴ and R⁵.

3. A process as claimed in claim 1 or 2, wherein R¹ is H.

4. A process as claimed in any of claims 1 to 3, wherein the R², R³, R⁴ and R⁵ substituents on any one piperidine derivative are identical.

5. A process as claimed in any of claims 1 to 4, wherein R² on any one piperidine derivative is methyl.

6. A process as claimed in any of claims 1 to 5, wherein n is 2.

7. A process as claimed in any of claims 1 to 6, wherein R is a group of the formula
- NH -R⁸ - NH -
where R⁸ is alkylene having from 1 to 20 carbon atoms.

8. A process as claimed in any of claims 1 to 7, wherein R is - NH - CH₂ - CH₂ - CH₂ - CH₂ - CH₂ - CH₂ - NH - .

9. A process as claimed in any of claims 1 to 8, wherein the polymerizing is carried out in the presence of at least one pigment.

10. The use of a compound (I) as set forth in any of claims 1 to 9 for preparing polyamides.

11. A polyamide obtainable by a process as claimed in any of claims 1 to 9.

12. The use of a polyamide as claimed in claim 11 for preparing filaments, fibers, films, fabrics and moldings.

13. Filaments, fibers, films, fabrics and moldings comprising a polyamide as claimed in claim 11.

## Revendications

1. Procédé de préparation de polyamides, **caractérisé en ce que** la polymérisation des monomères de départ ou des oligomères de départ est entreprise en présence d'au moins un composé de la formule (I) 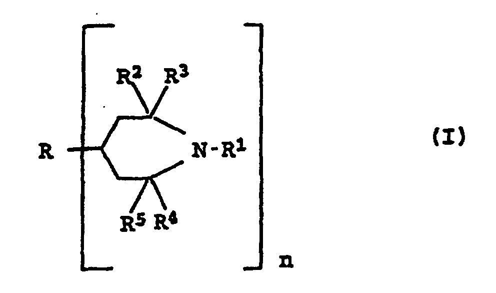 où
R représente un hydrocarbure en C₁ à C₂₀ aliphatique saturé R⁸, qui porte de 1 à 4 groupes R⁷ identiques ou différents formant un amide,
R⁷ est choisi dans le groupe formé par -(NHR⁹), où R⁹H est un radical alkyle comportant de 1 à 8 atomes de carbone, un radical cycloalkyle comportant de 3 à 10 atomes de carbone, ou un radical alkylène comportant de 2 à 20 atomes de carbone, un radical carboxyle ou un dérivé d'acide carboxylique.
R¹ représente H ou un radical alkyle en C₁ à C₂₀, cycloalkyle, benzyle, OR⁶ avec
R⁶ représentant H, alkyle en C₁ à C₂₀, cycloalkyle, benzyle,
R², R³, R⁴, R⁵ représentent indépendamment les uns des autres des radicaux alkyle en C₁ à C₁₀,
n est un nombre naturel supérieur à 1,
où les dérivés de pipéridine liés à R sont identiques ou différents en ce qui concerne les substituants, par lesquels on entend R¹, R², R³, R⁴ et R⁵,
le composé de la formule I étant ajouté aux monomères de départ ou au mélange réactionnel à polymériser et lié au polyamide par la réaction d'au moins l'un des groupes R⁷ formant un amide.

2. Procédé selon la revendication 1, où les dérivés de pipéridine liés à R sont identiques en ce qui concerne les substituants, par lesquels on entend R¹, R², R³, R⁴ et R⁵.

3. Procédé selon la revendication 1 ou 2, où R¹ représente H.

4. Procédé selon les revendications 1 à 3, où les substituants R², R³, R⁴ et R⁵ se trouvant sur un dérivé de pipéridine sont identiques.

5. Procédé selon les revendications 1 à 4, où un substituant R² sur un dérivé de pipéridine est un radical méthyle.

6. Procédé selon les revendications 1 à 5, où n est égal à 2, R⁷ est choisi dans le groupe formé par -(NHR⁹), où R⁹H est un radical alkyle comportant de 1 à 8 atomes de carbone, un radical cycloalkyle comportant de 3 à 10 atomes de carbone ou un radical alkylène comportant de 2 à 10 atomes de carbone, un radical carboxyle et un dérivé d'acide carboxylique.

7. Procédé selon les revendications 1 à 6, où R est un radical de formule -NH-R⁸-NH-, où R⁸ représente un radical alkylène comportant de 1 à 20 atomes de carbone.

8. Procédé selon les revendications 1 à 7, où R représente le groupe -NH-CH₂-CH₂-CH₂-CH₂-CH₂-CH₂-NH-.

9. Procédé selon les revendications 1 à 8, où l'on entreprend la polymérisation et/ou la polycondensation en présence d'au moins un pigment.

10. Utilisation d'un composé (I) selon les revendications 1 à 9 pour la préparation de polyamides.

11. Polyamide que l'on peut obtenir par un procédé selon les revendications 1 à 9.

12. Utilisation d'un polyamide selon la revendication 11 pour la préparation de fils, fibres, feuilles, tissus plats et corps façonnés.

13. Fils, fibres, feuilles, tissus plats et corps façonnés contenant un polyamide selon la revendication 11.
